(19) **Europäisches Patentamt European Patent Office Office européen des brevets**

(11) **EP 4 430 770 B1**

(12) **EUROPEAN PATENT SPECIFICATION**

(45) Date of publication and mention
of the grant of the patent:
**31.12.2025 Bulletin 2026/01**

(21) Application number: **22802747.0**

(22) Date of filing: **11.11.2022**

(51) International Patent Classification (IPC):
**H04B 10/70** (2013.01)   **G06N 10/40** (2022.01)
**H04Q 11/00** (2006.01)

(52) Cooperative Patent Classification (CPC):
**H04B 10/70; G06N 10/40**

(86) International application number:
**PCT/NL2022/050645**

(87) International publication number:
**WO 2023/085935 (19.05.2023 Gazette 2023/20)**

(54) **SUB-NANOSECOND SYNCHRONISATION OF NODES IN A QUANTUM NETWORK**

SYNCHRONISIERUNG VON KNOTEN IM SUBNANOSEKUNDENBEREICH IN EINEM QUANTENNETZWERK

SYNCHRONISATION SUB-NANOSECONDE DE NOEUDS DANS UN RÉSEAU QUANTIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.11.2021 NL 2029717**

(43) Date of publication of application:
**18.09.2024 Bulletin 2024/38**

(73) Proprietors:
• **Technische Universiteit Delft
  2628 CN Delft (NL)**
• **Nederlandse Organisatie voor toegepast-natuurwetenschappelijk Onderzoek TNO
  2595 DA 's-Gravenhage (NL)**

(72) Inventor: **VAN ZWET, Erwin John
  2600 AA Delft (NL)**

(74) Representative: **De Vries & Metman
  Overschiestraat 180
  1062 XK Amsterdam (NL)**

(56) References cited:
• **B. HENSEN ET AL: "Loophole-free Bell inequality violation using electron spins separated by 1.3 kilometres", NATURE, vol. 526, no. 7575, 21 October 2015 (2015-10-21), London, pages 682 - 686, XP055432594, ISSN: 0028-0836, DOI: 10.1038/nature15759**
• **TIM COOPMANS ET AL: "NetSquid, a NETwork Simulator for QUantum Information using Discrete events", ARXIV.ORG, CORNELL UNIVERSITY LIBRARY, 201 OLIN LIBRARY CORNELL UNIVERSITY ITHACA, NY 14853, 26 July 2021 (2021-07-26), XP091001247, DOI: 10.1038/S42005-021-00647-8**
• **ALEXANDRE ROULET ET AL: "Quantum synchronization and entanglement generation", ARXIV.ORG, CORNELL UNIVERSITY LIBRARY, 201 OLIN LIBRARY CORNELL UNIVERSITY ITHACA, NY 14853, 26 June 2018 (2018-06-26), XP081182580, DOI: 10.1103/ PHYSREVLETT.121.063601**
• **EBUBECHUKWU O ILO-OKEKE ET AL: "Remote quantum clock synchronization without synchronized clocks", ARXIV.ORG, CORNELL UNIVERSITY LIBRARY, 201 OLIN LIBRARY CORNELL UNIVERSITY ITHACA, NY 14853, 25 September 2017 (2017-09-25), XP081292311, DOI: 10.1038/S41534-018-0090-2**

**Description**

Field of the invention

The invention relates to synchronising events at a plurality of nodes in a quantum network; and, in particular, though not exclusively, to methods and systems for synchronising events at a plurality of nodes in a quantum network, a computer program product enabling a system to perform such methods, and a storage medium storing such computer program product.

Background of the invention

A quantum network comprises a number of quantum nodes that are geographically distant from each other. At the current state of technology, each node is an elaborate experimental setup where one or several qubits reside that can be manipulated using lasers, microwaves and/or other electromagnetic fields. At each node, it is possible to initialize a local qubit to a well-known quantum state; to manipulate the quantum state of a local qubit; and to perform a local qubit readout which collapses its quantum state.

A prerequisite to efficient quantum networking is a reliable method to generate entanglement between two or more qubits that are geographically separated by a considerable distance (typical order of magnitude: 1-100 kilometres). If this can be achieved, practical applications such as quantum key distribution and distributed quantum computing become possible.

In practice, the process of reaching inter-node entanglement comprises two stages: a preparatory stage and an operational stage. During the preparatory stage, each node locally initializes their qubit(s) to a well-known quantum state. In current implementations this involves a process of trial-and-error, and it can take many initialisation attempts to reach a state where the local node is ready to try an entanglement attempt. Therefore, the preparatory stage has a duration that is essentially unpredictable.

During the operational stage, a sequence of manipulations is executed at each node involved in the entanglement process to initiate the entanglement attempt, followed by an application-specific sequence of qubit manipulations. In order to start the operational stage, it is necessary that the preceding preparatory stage has completed on all nodes involved. The underlying physical processes demand that in this operational stage, the operations on different nodes are highly synchronised. The exact requirements depend on the parameters of the qubit, such as its wavelength, but a typical synchronisation requirement is of a level of 1 ns or better.

The timing behaviour and requirements of the preparatory and operational stages poses a problem: at each node, it is not known beforehand how long the preparatory stages of all involved nodes will take; but at the same time, the nodes need to coordinate the start and execution of their operational stages very precisely.

A further problem is posed by the fact that standard computing devices such as microcontrollers do not possess the required timing accuracy to start the operational stage at the determined starting time with sufficient temporal precision. Additionally, the uncertainty in the transmission delay of a signal (jitter) sent between two distant nodes generally increases with the distance and can easily be larger than the allowed timing variation in the synchronised starting time.

Apart from the fact that nodes need to determine a synchronised start time for the operational stage, it is also desirable that the synchronised start time follows the completion of the qubit preparation as quickly as possible, because the locally prepared qubit state at each node degrades. Therefore, a fast method to determine the synchronised start time increases the chance of successful entanglement. Furthermore, a fast method also increases the number of repeated executions (each comprising a preparatory and an operational stage) that can be performed per unit of time, increasing the throughput of the network.

Lago-Rivera et al, 'Telecom-heralded entanglement between multimode solid-state quantum memories', Nature 594 (2021), pages 37-40 describe a two-node quantum network where the nodes are placed near to each other (effectively approximately 25 m distant). Entanglements are attempted periodically using synchronised chopper wheels, i.e., rotating shutters with one or more openings, controlled by a single source.

However, this method is not well scalable to larger inter-node distances, as it would become unfeasible to synchronise the chopper wheels at both nodes this way. Moreover, if the period between entanglement attempts is small, there will be a high failure rate due to one of the nodes not having finished its preparation; and if the period between entanglement attempts is large, the method becomes very inefficient.

Hensen et al., 'Loophole-free Bell inequality violation using electron spins separated by 1.3 kilometres', Nature 526 (2015), pages 682-686 describe a two-node quantum network with a 'master node' and a 'slave node'. The nodes are separated by 1.3 km, which corresponds to a calibrated trigger delay of almost 10 $\mu$s with an uncertainty of 10 ns. When the slave node has finished preparing its local qubit, it sends a signal to the master node. When the master node is ready and has received the signal from the slave node, the master node sends a start signal to the slave node. The master node waits for the calibrated trigger delay and then starts the operational stage, the slave node starts as soon as the start signal is received.

This method is relatively inefficient and insufficiently accurate. Moreover, the method does not scale well for larger distances or networks with more than two nodes. There is therefore a need in the art for a method to determine a synchronised starting time between nodes in a quantum network that is reliable, efficient, and scalable both with respect to the distance between nodes and to the number of nodes.

Summary of the invention

It is an aim of embodiments in this disclosure to provide a method to efficiently and reliably determine a synchronised start time of an operational stage in a quantum network.

The inventor has realised that an efficient and reliable synchronisation method can be based on discretising the moments in time that nodes are allowed to transmit communication signals, resulting in a discrete set of allowed transmission times that is shared and synchronised between all nodes in the network. The inventor has furthermore realised that the allowed transmission times are advantageously based on a distribution of transmission times between the nodes, e.g. based on a transmission delay interval characterised by a minimum transmission delay and a maximum transmission delay.

In a first aspect, the disclosure relates to a method for synchronising events at a plurality of nodes in a quantum network. The method comprises receiving or determining transmission delay information about a transmission delay distribution of signals transmitted between a first node comprising a first qubit and a second node comprising a second qubit. The transmission delay information comprises a maximum transmission delay. The method further comprises receiving or determining a synchronised set of allowed transmission times based on the transmission delay distribution, and based on a synchronized clock shared between the nodes. The method further comprises executing, by the first node, a first qubit operation based on a start time. The execution by the first node includes initializing the first qubit and transmitting a first initialisation signal to the second node based on a first allowed transmission time selected from the set of allowed transmission times. The execution by the first node further includes receiving a second initialisation signal from the second node. The second initialisation signal may be indicative of initialisation of the second qubit. The second initialisation signal may be transmitted by the second node based on a second allowed transmission time selected from the set of allowed transmission times. The execution by the first node further includes determining the second allowed transmission time based on the second initialisation signal. For example, the second allowed transmission time may be determined based on a time of reception by the first node of the second initialisation signal or based on a payload of the second initialisation signal. The execution by the first node further includes determining the start time for the first qubit operation based on the first and second allowed transmission times, the transmission delay information and the synchronised clock.

Thus, the method may be considered to comprise a calibration stage, during which the nodes are provided with transmission delay information, and an execution stage, during which the nodes may initialise and manipulate the qubits. Typically, the calibration stage is performed only once for a large number of iterations of the execution stage.

The transmission delay information may comprise a first maximum transmission delay $t_{12,max}$ representative for signals transmitted from the first node to the second node, and a second maximum transmission delay $t_{21,max}$ representative for signals transmitted from the second node to the first node. A maximum transmission delay may represent an amount of time within which substantially all signals can be assumed to have arrived at its destination. The maximum transmission delay may include a safety margin, i.e., the maximum transmission delay may be larger than the longest expected transmission delay, but is preferably based on and relatively close to actually measured and/or modelled transmission delays.

The transmission delay information may comprise a first transmission delay interval and a first maximum transmission delay indicative of a transmission delay distribution from the first node to the second node, and a second transmission delay interval and a second maximum transmission delay indicative of a transmission delay distribution from the second node to the first node.

For example, a first transmission delay interval $\Delta t_{12}$ can be representative for signals transmitted from the first node to the second node, and a second transmission delay interval $\Delta t_{21}$ can be representative for signals transmitted from the second node to the first node. The first transmission delay interval $\Delta t_{12}$ may be based on the first maximum transmission delay $t_{12,max}$ and, optionally, a first minimum transmission delay $t_{12,min}$. Similarly. The second transmission delay interval $\Delta t_{21}$ may be based on the second maximum transmission delay $t_{21,max}$ and, optionally, a second minimum transmission delay $t_{21,min}$.

In some embodiments, the transmission delays between the two nodes may be assumed to be symmetric or approximately symmetric, and in that case a single transmission delay distribution may be used to represent transmission delays in both directions. Hence, in these embodiments, only one maximum transmission delay, preferably based on the first and/or second maximum transmission delays, needs to be included in the transmission delay information. Similarly, in these embodiments, only one transmission delay interval, preferably based on the first and/or second transmission delay intervals, needs to be included in the transmission delay information. In some cases, a transmission delay interval between two nodes may stretch from an implied minimum transmission delay (e.g., zero) to the maximum transmission delay between those nodes. In such a case, a single value may be used to determine both a transmission delay interval and a maximum transmission delay. In a more typical case, however, the transmission delay interval will be substantially smaller than the maximum transmission delay.

As was explained above, the method's execution stage may comprise a preparatory stage and, optionally, an operational stage. During the preparatory stage, each node involved in the synchronised event may initialise its qubit and transmit an initialisation signal to at least the other nodes involved in the synchronised event, the initialisation signal being indicative of completion of the initialisation. For example, when the first node has initialised the first qubit, the first node may transmit the first initialisation signal to the second node (and, optionally, further nodes) at a first allowed transmission time $t_{1,ready}$. Preferably, the allowed transmission time immediately following the initialisation of the first qubit is selected.

During the preparatory stage, each node involved in the synchronised event listens for an initialisation signal from all other nodes involved in the synchronised event. For example, the first node may listen for a second initialisation signal from the second node, the second signal indicating that the second node has initialised the second qubit. When the second initialisation signal has been received, the first node may determine the second allowed transmission time $t_{2,ready}$ using the synchronised set of allowed transmission times $\{t_{ready}\}$ and, optionally, the transmission delay information.

The point in time when the first node has received the second initialisation signal from the second node may be determined by computing $t_{2,ready} + t_{21,max}$. In general, the point in time when a node $j$ has received a signal from a node $i$ may be determined by computing $t_{i,ready} + t_{ij,max}$. As used herein, the point in time when a node has received a signal refers, unless otherwise specified, to the point in time that the node has received the signal with a predetermined probability, that is, the point in time where the node is practically guaranteed to have received the signal. This point in time may also be referred to as the latest point in time that the node has potentially received the signal. Generally, the actual reception of the signal is at an earlier point in time.

Thus, based on the determined allowed transmission times $t_{i,ready}$ for all nodes $i$ involved in the synchronised event and based on the transmission delay information for each pair of nodes $(i, j)$ involved in the event (typically the maximum transmission delays $t_{ij,max}$), each node may determine the synchronised start time $t_{start}$. Since all nodes have the same information, they can independently arrive at the same synchronised start time $t_{start}$. The synchronised start time $t_{start}$ can be determined such that each node can be sure that the synchronised start time $t_{start}$ is later than the point in time when each node involved in the synchronised event has received the initialisation signal from all other nodes involved in the synchronised event. In particular, the synchronised start time $t_{start}$ can be determined to be later than the moment in time that the first node has received the second initialisation signal and later than the moment in time that the second node has received the first initialisation signal. For example, the synchronised start time $t_{start}$ may be determined based on the first transmission time $t_{1,ready}$ and the first maximum transmission delay $t_{12,max}$, and on the second allowed transmission time $t_{2,ready}$ and the second maximum transmission delay $t_{21,max}$; e.g., by selecting the synchronised start time $t_{start}$ such that:

$$t_{start} \geq \max(t_{1,ready} + t_{12,max},\ t_{2,ready} + t_{21,max}) \qquad\qquad (1)$$

In general, the synchronised start time may be determined to be any time later than $\max(t_{i,ready} + t_{ij,max})$ for all pairs of nodes $(i, j)$ involved in the synchronised event.

In an embodiment, the method further comprises an operational stage, during which each node involved in the synchronised event, and in particular the first node, performs the following step: manipulating the first qubit in accordance with the qubit operation, the timing of the manipulation being based on the determined synchronised start time $t_{start}$ and on a signal from the synchronised clock.

As used in this disclosure, determining a value may refer to any method leading to the ability to use that value, and may include computing the value, receiving the value from a different device, or using a predetermined value. For example, the second transmission delay may be computed by the second node, and the computed value may be transmitted to the first node, which may subsequently store the computed value. Thus, both the first node and the second node are understood to have determined the second transmission delay. Similarly, the synchronised set of allowed transmission times can be determined by each node according to a deterministic algorithm, or may be determined centrally and distributed to the nodes.

As used in this disclosure, a node refers to a quantum node in a quantum network, unless the context implies otherwise. In a typical embodiment, each node comprises a qubit and has access to a synchronised clock, preferably a synchronised high-precision clock, for example based on CERN's White Rabbit design. The synchronised clock should have a timing jitter that is lower than the desired synchronisation accuracy.

As used in this disclosure, a transmission delay is the amount of time between a transmitting device beginning to transmit a signal and a receiving device registering the signal. The transmission delay can be determined by measuring one or more signals using a function generator and a time tagger. The maximum transmission delay may refer to a delay such that at least a predetermined percentage of signals is transmitted within the maximum transmission delay and need not be a maximum in an absolute sense. Similarly, the minimum transmission delay may refer to a delay such that at least a predetermined percentage of signals is transmitted with a transmission delay larger the minimum transmission delay and need not be a minimum in an absolute sense. The percentage of signals with a delay larger than the maximum transmission delay or smaller than the minimum transmission delay is typically substantially zero, e.g. less than 1 in million, less than 1 in $10^{12}$, or even smaller. The minimum and/or maximum transmission delays may be based on a statistical representation of transmission delays, e.g., the maximum transmission delay can be determined as a mean transmission delay plus six times a standard variation of the transmission delay, and the minimum transmission delay can be determined as the mean transmission delay minus six times the standard variation of the transmission delay.

Typically, the calibration stage is performed only once, or periodically (e.g., every minute, every hour, every day, or even every month), while the execution stage (typically comprising a preparatory stage and an operational stage) are repeated a large number of times, typically, tens to hundreds or even millions of times for each calibration stage.

By employing this method, events at different nodes in a quantum network may be synchronised with high precision and efficiency. Analysis of such an approach has shown that for a realistic two-node system, the described method leads to an entanglement attempt rate that is roughly 40% higher than an approach without communication.

In an embodiment, determining the transmission delay information comprises determining a minimum transmission delay between the first and second nodes. In such an embodiment, the synchronised set of allowed transmission times may be based on a transmission delay interval. The transmission delay interval is preferably based on the interval between the minimum transmission delay and the maximum transmission delay.

For example, determining the first transmission delay interval $\Delta t_{12}$ may comprise determining a minimum transmission delay $t_{12,min}$ between the first node and the second node. In such an embodiment, the delay interval $\Delta t_{12}$ is preferably being based on a difference between the minimum and maximum transmission delays, e.g., $\Delta t_{12} = t_{12,max} - t_{12,min}$. The minimum transmission delay may e.g. be determined based on measurements, or based on a known relationship with the maximum transmission delay.

Determining the transmission delay interval based on the minimum transmission delay allows for smaller transmission delay intervals and hence for smaller intervals between subsequent allowed transmission times. This in turn can increase the rate with which the manipulation of the qubit may be executed.

In an embodiment, the time interval between two subsequent transmission times in the synchronised set of allowed transmission times is larger than the transmission delay interval, preferably larger than the largest transmission delay interval between all nodes involved in the synchronised event. Preferably, the time interval between subsequent allowed transmission times is a constant.

Thus, the synchronised set of allowed transmission times $\{t_{ready}\}$ may be defined such that each interval $\Delta t_N$ between two subsequent allowed transmission times is larger than the maximum of the first transmission delay interval $\Delta t_{12}$ and the second transmission delay interval $\Delta t_{21}$, e.g. by selecting $\Delta t_N$ such that $\Delta t_N > \max(\Delta t_{12}, \Delta t_{21})$.

For example, the synchronised set of allowed transmission times may be defined as $t_{0,N} + n \Delta t_N$, with $t_{0,N}$ being a synchronised reference time, $n$ being an integer number, and $\Delta t_N$ being a constant larger than the largest transmission delay interval comprised in the transmission delay information and/or between all nodes involved in the synchronised event. Preferably, $\Delta t_N$ is related to the clock rate of the synchronised high-precision clock, e.g. an integer multiple of the clock rate. A constant interval between allowed transmission times results in an easy to compute synchronised set of allowed transmission times.

In an embodiment, determining the second allowed transmission time is based on a reception time when the second initialisation was received and on the transmission delay distribution. For example, determining the second allowed transmission time $t_{2,ready}$ may be based on a second transmission delay $t_{21}$, e.g., based on the second maximum transmission delay $t_{21,max}$ or the second minimum transmission delay $t_{21,min}$. More in particular, the second allowed transmission time may be determined as the allowed transmission time immediately after the time of reception $t_{21,receive}$ of the second initialisation signal minus the second maximum transmission delay, for example by computing:

$$t_{2,ready} = \Delta t_{trans} \cdot \text{ceil}\left( (t_{21,receive} - t_{21,max}) / \Delta t_{trans} \right). \quad (2)$$

Alternatively, the second allowed transmission time may be determined as the allowed transmission time immediately before the time of reception minus the second minimum transmission delay, for example by computing:

$$t_{2,ready} = \Delta t_{trans} \cdot \text{floor}\left( (t_{21,receive} - t_{21,min}) / \Delta t_{trans} \right). \quad (3)$$

Alternatively, the second allowed transmission time may be determined as the allowed transmission time closest to the time of reception minus the average of the second minimum transmission delay $t_{21,max}$ and the second maximum transmission delay $t_{21,min}$, for example by computing:

$$t_{2,\text{ready}} = \Delta t_{\text{trans}} \cdot \text{round}\left( (t_{21,\text{receive}} - (t_{21,\text{min}} + t_{21,\text{max}})/2) / \Delta t_{\text{trans}} \right). \tag{4}$$

This way, the initialisation signal does not need to comprise a payload comprising an indication of the second allowed transmission time. For example, the initialisation signal can be a binary signal, e.g. a single high or low voltage.

In a different embodiment, the second initialisation signal comprises a payload, which may comprise an indication of the second allowed transmission time $t_{2,\text{ready}}$. This can be used if e.g. a packet-based network is used to send the initialisation signals. In such an embodiment, determining the second allowed transmission time (i.e., the time that the second node sends the second initialisation signal to the first node) may be based on the payload of the second initialisation signal. For example, determining the second allowed transmission time $t_{2,\text{ready}}$ may be based on processing the payload of the second initialisation signal. This may reduce the computational burden.

In an embodiment, the synchronised start time is selected from a predetermined set of start times. Preferably, the predetermined set of start times is equally distributed over time. For example, the set of start times may be defined as $t_{0,s} + m\Delta t_S$, with $t_{0,s}$ being a synchronised reference time, $m$ being an integer number, and $\Delta t_S$ being a constant. Preferably, $\Delta t_S$ is related to the clock rate of the synchronised clock, e.g. an integer multiple of the clock rate. This way, additional uncertainty regarding the start time may be removed.

In an embodiment, execution of the first qubit operation further comprises arming a signal generator based on the start time; generating a start signal in response to the armed signal generator receiving a signal from the synchronised clock; and executing the first qubit operation in response to receiving the start signal.

In such an embodiment, each node may comprise a high-precision signal generator, e.g., a high-precision wavefront generator, which typically initiates all timing-critical operations of a quantum node. Thus, the timing of the manipulation may be based upon reception of a high-precision start signal. The arming of the signal generator is less time-sensitive than the actual starting moment, and the arming window may be selected sufficiently large based on the properties of the microcontroller determining the start time.

In a typical set-up, the quantum event (e.g., entangling) takes place at an intermediate location, usually approximately halfway between the involved nodes. If the propagation time to the intermediate location is not equal for all involved nodes, the timing at the nodes may be adjusted to compensate for this difference in propagation time and to ensure a synchronised event at the intermediate location.

Therefore, in an embodiment, the method may further comprise receiving or determining an intermediate transmission delay difference to an intermediate location between the first node and the second node, the intermediate transmission delay difference being based on a first intermediate transmission delay between the first node and the intermediate location and on a second intermediate transmission delay between the second node and the intermediate location. In such an embodiment, the start time may be based on the determined intermediate transmission delay difference.

For example, a first intermediate transmission delay $t_{1,\text{IM}}$ may be defined as the transmission delay between the first node and the intermediate location and, a second intermediate transmission delay $t_{2,\text{IM}}$ may be defined as the transmission delay between the second node and the intermediate location. The intermediate transmission delay difference $\Delta t_{12,\text{IM}}$ to an intermediate location IM between the first node and the second node may then be based on or defined as $\Delta t_{12,\text{IM}} = t_{2,\text{IM}} - t_{1,\text{IM}}$. In such an embodiment, the timing of the manipulation may be additionally based on the determined intermediate transmission delay difference $\Delta t_{12,\text{IM}}$.

This way, the timing at the nodes may be adjusted to ensure a synchronised event at the intermediate location.

In an embodiment, the plurality of nodes comprises exactly two nodes. This is a relatively simple and easy to implement embodiment.

In a different embodiment, the event is synchronised between more than two nodes. In such an embodiment, the method steps described above are performed for each pair of nodes involved in the synchronised event.

In a second aspect, the disclosure relates to a node comprising a qubit and a processor, the node having access to a synchronised high-precision clock, the node being communicatively coupled to one or more other nodes in a quantum network. The processor may be configured to perform method steps comprising receiving or determining transmission delay information about a transmission delay interval between a first node comprising a first qubit and a second node comprising a second qubit, the transmission delay information comprising a maximum transmission delay; and receiving or determining a set of allowed transmission times based on the transmission delay information and based on a synchronised clock shared between the nodes. The method steps may further comprise executing, by the first node, a first qubit operation based on a start time. The execution by the first node may include: initializing the first qubit and transmitting a first initialisation signal to the second node based on a first allowed transmission time selected from the set of allowed transmission times; receiving a second initialisation signal from the second node, the second initialisation signal being indicative of initialisation of the second qubit and the second initialisation signal being transmitted by the second node based on a second allowed transmission time selected from the set of allowed transmission times; determining the second allowed transmission time based on the second initialisation signal; determining the start time for the first qubit operation based on the first and second allowed transmission times, the transmission delay information and the synchronised clock.

In an aspect, the disclosure relates to a quantum network of nodes comprising a plurality of nodes as described above.

One aspect of this disclosure relates to a computer comprising a computer readable storage medium having computer readable program code embodied therewith, and a processor, preferably a microprocessor, coupled to the computer readable storage medium, wherein responsive to executing the computer readable program code, the processor is configured to perform any of the methods described herein.

One aspect of this disclosure relates to a computer program or suite of computer programs comprising at least one software code portion or a computer program product storing at least one software code portion, the software code portion, when run on a computer system, being configured for executing any of the methods described herein.

One aspect of this disclosure relates to a non-transitory computer-readable storage medium storing at least one software code portion, the software code portion, when executed or processed by a computer, is configured to perform any of the methods described herein.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

The invention will be further illustrated with reference to the attached drawings, which schematically will show embodiments according to the invention. It will be understood that the invention is not in any way restricted to these specific embodiments. Identical reference signs refer to identical, or at least similar elements. The invention is defined in the independent claims. Advantageous embodiments are set out in the dependent claims.

Brief description of the drawings

Aspects of the invention will be explained in greater detail by reference to exemplary embodiments shown in the drawings, in which:

Fig. 1 depicts a quantum network comprising a plurality of quantum nodes according to an embodiment of the invention;

Fig. 2A and 2B schematically depict methods of determining a synchronised start time according to embodiments of the invention;

Fig. 3A-3C depict various topologies for a quantum network comprising a plurality of quantum nodes according to embodiments of the invention;

Fig. 4 depicts a flow diagram for synchronising events at a plurality of nodes in a quantum network according to an embodiment of the invention; and

Fig. 5 is a block diagram illustrating an exemplary data processing system that may be used for executing methods and software products described in this application.

Detailed description

The methods described herein allow for efficient, high-precision synchronisation of events at a plurality of nodes in a quantum network. It is noted that although the depicted examples relate to entanglement, the methods are equally applicable to other systems or other events wherein high-precision synchronisation is required.

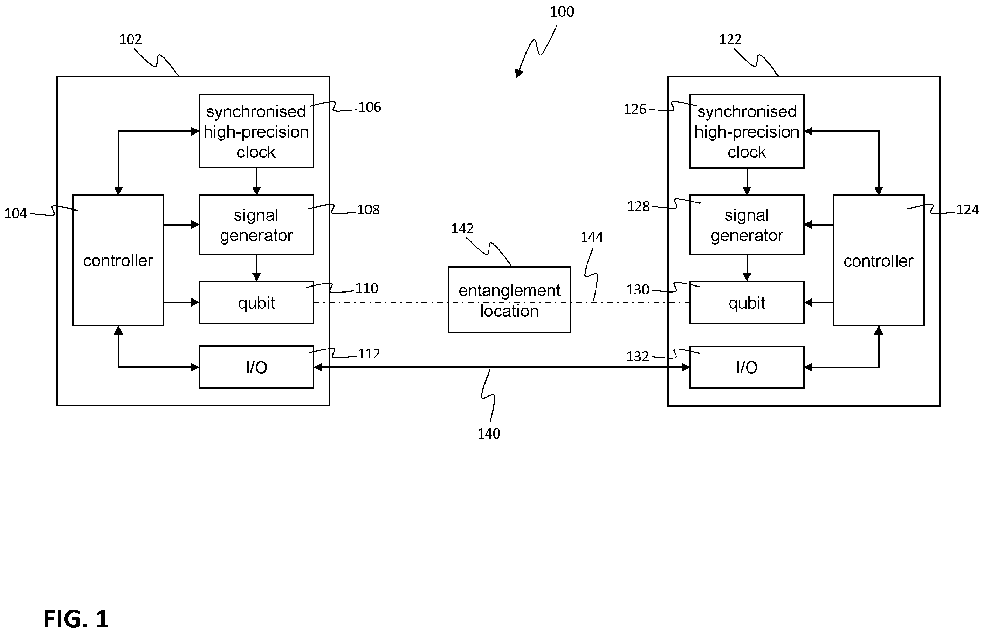

Fig. 1 depicts a quantum network comprising a plurality of quantum nodes according to an embodiment of the invention. A quantum network 100 comprises quantum nodes 102,122 that are geographically distant, e.g. being a distance with an order of magnitude of 1-100 km away from each other. Each quantum node comprises one or more qubits 110,130, and equipment to prepare (initialise) and manipulate these qubits using e.g. lasers, microwaves and/or other electromagnetic fields. This equipment is typically controlled by a signal generator 108, e.g., a high-precision wavefront generator. The signal generator can ensure accurate timing of manipulations within a single quantum node.

For each (local) qubit, the respective quantum node can be configured to initialise the qubit to a well-known quantum state; to manipulate the quantum state of the qubit; and to perform readout on the qubit which collapses its quantum state.

It is an aim of quantum nodes in a quantum network to jointly establish quantum events, e.g. entanglement of photons associated with the respective quantum nodes' qubits. Indeed, a prerequisite of many quantum networking applications is establishment of entanglement between qubits of different quantum nodes. Entanglement is typically achieved at an intermediate location 142, which is generally positioned at a central location between the quantum nodes involved in the entanglement, for instance roughly halfway between two quantum nodes. The intermediate location may comprise further equipment to facilitate a quantum event such as entanglement.

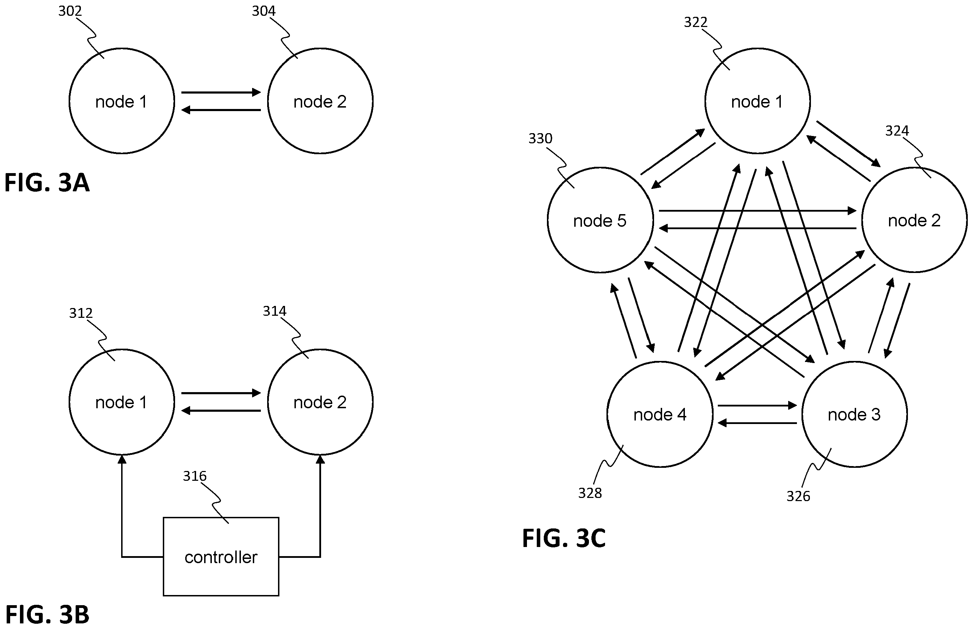

The quantum nodes further comprise a communication interface **112,132.** A quantum node uses the communication interface to communicate with each other node in the network using a classic (i.e., non-quantum) communication channel **140.** For example, each node may have access to a unidirectional communication channel towards each other node, and consequently, each node may also receive unidirectional communication channels form each other node. Alternatively, bidirectional message channels may be used, or a different communication network topology. Several possible network topologies are discussed in more detail below with reference to **Fig. 3A-C.**

Thus, using these communication channels, each node can send messages to each other node and can receive messages from each other node. Preferably, precautions are taken to ensure that messages that are sent out will always arrive, and that no spurious messages will be injected. Practically speaking, this can be achieved by using a suitable channel encoding known in the art, or by using dedicated signal channels.

The quantum nodes also have access to a quantum communication channel **144** for allowing the qubits to interact with each other. As was mentioned above, an interaction may comprise an event, e.g. an entanglement, at the intermediate location. Consequently, the quantum communication channel may comprise a plurality of partial connections of a quantum node with the intermediate location. The classic communication channel and the quantum communication channel can be physically the same channel, e.g. a glass fibre with a time sharing protocol, or they can be physically separate channels. In general, a dedicated quantum communication channel is preferred.

Furthermore, each quantum node comprises, or at least has access to, a synchronised clock **106,126,** preferably a synchronised high-precision clock. A set of (mutually) synchronised clocks may be known as a global clock ort a shared clock. Typically, a synchronised clock counts time as a discrete number of ticks since a shared global time $t_0 = 0$. For example, the synchronised clock may count with a frequency of 10 MHz, with a timing jitter in the order of 20 ps. The synchronised clocks provide a shared time base to the quantum nodes despite the quantum nodes being geographically distant. Thus, the time of any event in each node, and by extension in the quantum network, has a well-defined value relative to the global clock, that is understood and interpreted the same at all involved nodes.

Proper time distribution mechanisms are known in the art. Moreover, equipment to implement such a global clock infrastructure is commercially available; for example, time-distribution network switches based on CERN's *White Rabbit* design may be used. The synchronised clock should have a timing jitter that is lower than the desired synchronisation accuracy.

In the depicted example, the quantum network comprises a first quantum node **102** and a second quantum node **122.** Parameters associated with the first quantum node may be indicated with a subscript label "1", and parameters associated with the second quantum node may be indicated with a subscript label "2".

A quantum event, such as a process to establish entanglement may comprise a calibration stage and an execution stage. The execution stage may comprise a preparatory stage and an operational stage. Each stage may generally only begin after the previous stage has been completed by all nodes involved in the quantum event. Typically, the calibration stage is performed only once for a large number of iterations of the execution stage.

A transmission delay between a transmitting device and a receiving device may be defined as the amount of time between the transmitting device beginning to transmit a signal and the receiving device registering the signal. The transmission delay may sometimes be referred to as a propagation time. The transmission delays of signals or messages along a classical communication channel exhibit some variation due to, e.g., timing jitter and long-term drift. The possible or probable transmission delays can be determined and characterised for each one-way channel in the system. It is not necessarily the case that the characterisations are symmetrical, that is, the characterisation of transmission delays from a first node to a second node can be different from the characterisation of transmission delays from the second node to the first node. However, these characterisation will often be (very) similar in real-life networks.

During the calibration stage, the quantum nodes determine or receive transmission delay information comprising a transmission delay distribution between each pair of nodes. The transmission delay distribution for a pair of nodes may define a range of possible or probable transmission delays of a signal or message being transmitted from the first node of the pair to the second node of the pair and from the second node to the first node.

The transmission delay distribution may be described using statistical descriptors. In general, it may be assumed that a transmission delay $t_{ij}$ between two nodes $i$ and $j$ is variable, but bounded, i.e., $t_{ij,\min} \le t_{ij} \le t_{ij,\max}$ with $t_{ij,\min}$ and $t_{ij,\max}$ denoting, respectively, a minimum and maximum transmission delay. The maximum transmission delay may refer to a delay such that at least a predetermined percentage of signals is registered before the maximum transmission delay and need not be a maximum in the absolute sense. Similarly, the minimum transmission delay may refer to a delay such that at least a predetermined percentage of signals is registered after the minimum transmission delay and need not be a minimum in the absolute sense.

The maximum and/or minimum transmission delays may include a 'safety margin', that is, the value for the maximum transmission delay $t_{ij,\max}$ may be larger than the largest transmission delay measured during determination of the transmission delay distribution. This safety margin can be based, for example, on a fixed amount, on a percentage of the largest measured transmission delay, or on the transmission delay interval. Similarly, the minimum transmission delay may be smaller than the smallest transmission delay measured during determination of the transmission delay distribution.

Based on these values, a transmission delay interval $\Delta t_{ij}$ between two nodes $i$ and $j$ can be determined as a difference between the maximum transmission delay $t_{ij,\max}$ and the minimum transmission delay $t_{ij,\min}$ between those nodes, i.e.,

$$\Delta t_{ij} = t_{ij,\max} - t_{ij,\min}. \tag{5}$$

Thus, the transmission delay interval between two nodes can be a time interval within which a predetermined percentage (typically, substantially all) of signals may be communicated between those two nodes. As each node is assumed to be aware of its own status, the transmission delay from a node to itself may be taken to be zero, i.e.:

$$\Delta t_{ii} = t_{ii,\max} = t_{ii,\min} = 0. \tag{6}$$

For example, in a quantum network with two quantum nodes, there are two non-zero transmission delay intervals:

$$\Delta t_{12} = t_{12,\max} - t_{12,\min}, \tag{7}$$

$$\Delta t_{21} = t_{21,\max} - t_{21,\min}. \tag{8}$$

where $\Delta t_{12}$ denotes the transmission delay interval for signals from the first node to the second node and $\Delta t_{21}$ denotes the transmission delay interval for signals from the second node to the first node.

Thus, each node determines or receives transmission delay information about the transmission delay distribution. The transmission delay information comprises at least the maximum transmission delay $t_{ij,\max}$ for each pair of nodes $i$, $j$ ($i \neq j$), or information based on which each maximum transmission delay $t_{ij,\max}$ can be determined. The transmission delay information furthermore generally comprises the transmission delay interval $\Delta t_{ij}$ for each pair of nodes $i$, $j$ ($i \neq j$), or information based on which each transmission delay interval $\Delta t_{ij}$ can be determined. In general, the transmission delay information comprises parameters defining a transmission delay distribution for each pair of nodes $i$, $j$ ($i \neq j$). Typical examples of parameters are a set $\{t_{ij,\min}, t_{ij,\max}\}$ comprising the minimum transmission delay $t_{ij,\min}$ and the maximum transmission delay $t_{ij,\max}$; a set $\{t_{ij,\max}, \Delta t_{ij}\}$ comprising the maximum transmission delay $t_{ij,\max}$ and a transmission delay interval $\Delta t_{ij}$; or a set $\{\mu_{ij}, \sigma_{ij}\}$ comprising a mean transmission delay $\mu_{ij}$ and a standard deviation $\sigma_{ij}$.

For example, in a quantum network with two nodes, the transmission delay information may comprise a first transmission delay interval $\Delta t_{12}$ and a first maximum transmission delay $t_{12,\max}$ indicative of a transmission delay distribution from the first node to the second node, and a second transmission delay interval $\Delta t_{21}$ and a second maximum transmission delay $t_{21,\max}$ indicative of a transmission delay distribution from the second node to the first node.

As the minimum transmission delay between two nodes is always at least zero, in principle, a value of $t_{ij,\min} = 0$ could be assumed. In that case, only the maximum transmission delay $t_{ij,\max}$ needs to be known, as the transmission delay interval $\Delta t_{ij}$ would be assumed to be equal to the maximum transmission delay, reducing the need for data transfer between the nodes. However, it is generally considerably more efficient to use a more accurate value for $t_{ij,\min}$, as this allows for a smaller value for the transmission delay intervals and hence (as will be explained below) for smaller intervals between subsequent allowed transmission times. A smaller interval between subsequent allowed transmission times relates to an increase in the rate with which the manipulation of the qubit may be executed, and thus network throughput.

It should be noted that the transmission delays, and thus the values for, e.g., the maximum transmission delay $t_{ij,\max}$ and the transmission delay interval $\Delta t_{ij}$, may depend on the time window over which they have been determined. In particular, the values for $t_{ij,\max}$ and $\Delta t_{ij}$ may vary over time. For example, due to thermal expansion, wires used for communication may be longer in the summer than in the winter, and longer during the day than during the night. Consequently, updated values for $t_{ij,\max}$ and $\Delta t_{ij}$ may need to be determined periodically. Frequent updating may lead to more accurate values and typically to smaller transmission delay intervals. If sufficient data are available, measurements may be supplemented by model-based modification to account for, e.g., diurnal and seasonal variation.

Typically, the transmission delay between two nodes is approximately, but not completely symmetric, that is, in general, although, e.g., $t_{12,\max} \approx t_{21,\max}$ it is not true that $t_{12,\max} = t_{21,\max}$. The same is true for the other parameters describing the transmission delay distribution. Therefore, the transmission delay distribution may be determined separately for each direction. This may result in a slightly more efficient method. Alternatively, since the transmission delays between two nodes are generally approximately symmetric, the same values may be used to describe the transmission delay distribution in both directions, reducing the number of parameters that needs to be determined and/or shared between the nodes.

When a single set of parameters is used to describe transmissions between two nodes in both directions, care should be taken that the set of parameters correctly describes both connections. For example, the maximum transmission time $t_{max}$ for both directions should be larger than or equal to the largest maximum transmission time for a single direction, which can be achieved by computing, e.g., $t_{max} = \max(t_{12,max}, t_{21,max})$, or $t_{max} = t_{12,max} + \delta t$, where $\delta t$ denotes a 'safety margin' that is larger than a presumed maximum difference between $t_{12,max}$ and $t_{21,max}$. Similarly, the transmission time interval for both directions should be larger than or equal to the largest transmission time interval for a single direction.

The transmission delay information may be determined, for instance, by the nodes or by a central entity. Determining a transmission delay distribution may comprise determining a statistical description of a number of signal transmissions, e.g. a minimum and maximum transmission delay; a mean transmission delay and a standard deviation; or a combination thereof, such as a minimum and maximum transmission delay where measurements that are more than six standard deviations from the mean transmission delay are discarded.

The transmission delay information may be based on measurements, models, or combinations therefore. The transmission delay information may be determined, for example, by doing an all-to-all channel characterization, and distributing this information to all nodes. In general, measurements may be more precise, but especially for very large networks, model-based distributions can be more efficient, as the number of node-to-node channels grows quadratically with the number of nodes.

In some embodiments, the signals exchanged by the nodes using the classical communication channel do not comprise a payload or any other content. In these embodiments, only the timing of the signals is used to convey information. This type of messaging can easily be implemented using a channel, e.g., a physical medium like a wire, that can transport a two-level signal (e.g., a high voltage and a low voltage). Other embodiments may use a signal or message with a payload so that additional information may be shared.

The send time may then be determined by the leading edge of a short pulse emitted by the sender, while the receive time may be determined by the time the pulse's leading edge is observed by the receiver.

During the calibration stage, the quantum nodes furthermore determine or receive a synchronised set of allowed transmission times $\{t_{trans}\}$ defining a set of discrete moments in time when the nodes are allowed to transmit, e.g., broadcast, an initialisation signal to the other nodes. The initialisation signal, as will be explained in more detail below, indicates that a node has completed preparing its qubit. By discretizing the times at which nodes may transmit the initialisation signal to the other nodes in the system, it is possible to correct for timing variations induced by variation in transmission delays in the classic communication channels.

The synchronised set of allowed transmission times $\{t_{trans}\}$ may be based on the determined transmission delay intervals. In particular, each transmission interval $\Delta t_{trans}$, which is defined as the difference between two consecutive allowed transmission times, should be larger than each of the transmission delay intervals $\Delta t_{ij}$ for all nodes $i, j$ in the network, or equivalently, larger than the largest transmission delay interval, i.e.:

$$\Delta t_{trans} > \max(\Delta t_{ij}), \{i,j\} \in N \times N \tag{9}$$

where $N$ is the number of nodes in the network. So, for example, in a network with two nodes, for all times in $\{t_{trans}\}$,

$$\Delta t_{trans} > \Delta t_{12} \text{ and } \Delta t_{trans} > \Delta t_{21}, \tag{10}$$

The synchronised set of allowed transmission times $\{t_{trans}\}$ may further be based and on the properties of the synchronised clocks, in particular on the clock period $\Delta t_{clock}$, where $\Delta t_{clock} = 1/f_{clock}$ with $f_{clock}$ denoting the clock frequency. For example, for a clock with a clock frequency of 10 MHz, the clock period is $\Delta t_{clock} = 1/(10 \text{ MHz}) = 100$ ns. The synchronised set of allowed transmission times $\{t_{trans}\}$ is typically chosen as a regular periodic (one-dimensional) grid, i.e., the transmission interval $\Delta t_{trans}$ is generally a constant. A constant transmission interval results in an easy to determine set of allowed transmission times. In such a case, the set of allowed transmission times $\{t_{trans}\}$ may be defined as

$$\{t_{trans}\} = \{t = t_0 + n \Delta t_{trans}, n = 1, 2, \ldots\} \tag{11}$$

wherein $t_0$ denotes a synchronised reference time, $n$ a positive integer, and $\Delta t_{trans}$ denotes a constant transmission interval that is larger than each of the transmission delay intervals $\Delta t_{ij}$ for all nodes $i, j$ involved in the event. Preferably, the transmission interval $\Delta t_{trans}$ is an integer multiple of the clock period $\Delta t_{clock}$ of the synchronised clock.

$$\Delta t_{trans} = m \Delta t_{clock}, m \text{ a positive integer} \tag{12}$$

Preferably, $m$ is the smallest positive integer for which condition (9) holds. However, other embodiments may use a different (larger) value of $m$, which may be based on the particulars of the used hardware.

If the nodes have access to all transmission delay intervals, they may each determine the set of allowed

transmission times $\{t_{\text{trans}}\}$ themselves. In other embodiments, the set of allowed transmission times $\{t_{\text{trans}}\}$ may be determined centrally and distributed to the nodes. In that case, the transmission delay information need not comprise the transmission delay intervals.

Thus, at the end of the calibration stage, each node has access to the same set of maximum transmission delays $t_{ij,\text{max}}$ for all nodes $i, j$ in the network, and to the same set of allowed transmission times $\{t_{\text{trans}}\}$. Typically, the calibration stage is performed periodically (e.g., every day or every hour). Typically, the calibration stage is performed only once for a large number of repetitions of the execution stage. The execution stage comprises a preparatory stage during which the qubits are prepared (initialised). The qubits must wait until they are sure that all nodes have finished the preparatory stage, before they can (simultaneously) start the operational stage.

During the preparatory stage, each quantum node may prepare its local qubit. The duration of the preparation is unpredictable, but the quantum node can determine when the local preparation is finished. When the preparation is finished, the quantum node waits for the a time point (preferably the first time point) that is in the set of allowed transmission times $\{t_{\text{trans}}\}$, and then sends a signal to all other quantum nodes involved in the event, the signal indicating that the quantum node is ready. The signal indicating that the quantum node is ready may be referred to as a initialisation signal. The time point that a node $i$ transmits its initialisation signal may be referred to as the ready time $t_{i,\text{ready}}$; for example, the first node may transmit its initialisation signal at $t_{1,\text{ready}}$ and the second node may transmit its initialisation signal at $t_{2,\text{ready}}$, where $t_{1,\text{ready}}$ and $t_{2,\text{ready}}$ are times points from the set of allowed transmission times $\{t_{\text{trans}}\}$.

As was explained above, the execution stage may comprise a preparatory stage and, optionally, an operational stage. During the preparatory stage, each node involved in the synchronised event initialises its qubit and transmits an initialisation signal to at least the other nodes involved in the synchronised event, the initialisation signal being indicative of completion of the initialisation. When the first node has initialised the first qubit, the first node transmits the first initialisation signal to the second node (and, optionally, further nodes) at a first allowed transmission time $t_{1,\text{ready}}$. Preferably, the allowed transmission time immediately following the initialisation of the first qubit is selected.

The initialisation signal can be a 'bare' signal, e.g. a single bit not encoding any further information, or a message with a payload. If the initialisation signal comprises a payload, the payload may comprise the ready time of the node transmitting the initialisation signal.

During the entire preparatory stage (that is, both when the quantum node is preparing its local qubit and when it has finished doing so), each quantum node $i$ listens for initialisation signals from the other quantum nodes, indicating that the other quantum nodes have finished preparing their respective qubits. Each quantum node $i$ then determines the ready times $t_{j,\text{ready}}$ ($j \neq i$) for the other quantum nodes. The first node listens for an initialisation signal from the second node, the initialisation signal indicating that the second node has prepared the second qubit. When the initialisation signal has been received by the first node, the first node determines the second ready time $t_{2,\text{ready}}$.

If the initialisation signal comprises a payload, the ready time $t_{j,\text{ready}}$ may be determined based on the payload of the respective initialisation signal. Otherwise, the ready time $t_{j,\text{ready}}$ of a quantum node $j$ can be determined based on the reception time of the initialisation signal and the transmission delay distributions in the following way.

Each quantum node $i$ may determine a reception time $t_{ji,\text{receive}}$ at which the initialisation signal sent by node $j$ was received by node $i$; e.g. the first quantum node may determine the reception time $t_{21,\text{receive}}$ when the initialisation signal transmitted by the second node is registered by the first node. Based on the reception time $t_{ji,\text{receive}}$, the ready time $t_{j,\text{ready}}$ of the quantum node $j$ can then be determined using the transmission delay distribution and the set of allowed transmission times $\{t_{\text{trans}}\}$ and/or the transmission interval $\Delta t_{\text{trans}}$. For example, the ready time $t_{j,\text{ready}}$ may be determined, by each node $i$, using, e.g.:

$$t_{j,\text{ready}} = \Delta t_{\text{trans}} \cdot \text{round}\left( (t_{ji,\text{receive}} - (t_{ji,\text{min}} + t_{ji,\text{max}})/2) / \Delta t_{\text{trans}} \right) \tag{13}$$

where round() denotes a function that returns the nearest integer.

For example, in a network with two quantum nodes, the first quantum node may compute

$$t_{2,\text{ready}} = \Delta t_{\text{trans}} \cdot \text{round}\left( (t_{21,\text{receive}} - (t_{21,\text{min}} + t_{21,\text{max}})/2) / \Delta t_{\text{trans}} \right) \tag{14}$$

and the second quantum node may compute:

$$t_{1,\text{ready}} = \Delta t_{\text{trans}} \cdot \text{round}\left( (t_{12,\text{receive}} - (t_{12,\text{min}} + t_{12,\text{max}})/2) / \Delta t_{\text{trans}} \right) \tag{15}$$

The ready time $t_{j,\text{ready}}$ may also be determined using alternative computations, such as:

$$t_{j,\text{ready}} = \Delta t_{\text{trans}} \cdot \text{floor}\left( (t_{ji,\text{receive}} - t_{ji,\text{min}}) / \Delta t_{\text{trans}} \right) \tag{16}$$

$$t_{j,\text{ready}} = \Delta t_{\text{trans}} \cdot \text{ceil}\left( (t_{ji,\text{receive}} - t_{ji,\text{max}}) / \Delta t_{\text{trans}} \right) \qquad (17)$$

where floor() denotes a function returning the largest integer smaller than the function's argument and ceil() denotes a function returning the smallest integer larger than the function's argument.

It is possible to perform these calculations using integer arithmetic only, which can be advantageous for a high-speed implementation on a microcontroller. An advantage of using equation (13), based on rounding, to determine the readiness time is that it is robust for transmission delay values that are outside the interval $(t_{ji,\text{min}}, t_{ji,\text{max}})$, provided they are less than $\Delta t_{\text{trans}}/2$ away from the average transmission delay $(t_{ji,\text{min}} + t_{ji,\text{max}})/2$. However (as will be discussed below in more detail), if the actual transmission $t_{ji}$ delay is (much) larger than the assumed maximum transmission delay $t_{ji,\text{max}}$, the receiving node $i$ may be too late to start the operational stage at the determined synchronised start time.

Based on the set of readiness times $t_{i,\text{ready}}$ for all quantum nodes $i$ and the maximum transmission delays $t_{ij,\text{max}}$ for all pairs of quantum nodes $(i, j)$, a synchronised start time $t_{\text{start}}$ is determined. In general, a point in time $t_{i,\text{known}}$ that all nodes $j$ are guaranteed to have received a initialisation signal sent by node $i$ can be determined by

$$t_{i,\text{known}} = \max_j (t_{i,\text{ready}} + t_{ij,\text{max}}); \; j = 1, 2, \ldots, N \qquad (18)$$

where N denotes the number of nodes in the network. Consequently, the point in time $t_{\text{all\_known}}$ that all nodes $i$ are guaranteed to have received a initialisation signal sent by all other nodes $j$ can be determined by:

$$t_{\text{all\_known}} = \max_{i,j} (t_{i,\text{ready}} + t_{ij,\text{max}}); \; i = 1, 2, \ldots, N; \; j = 1, 2, \ldots, N \qquad (19)$$

This point in time $t_{\text{all\_known}}$ can be calculated by all quantum nodes once they have received the initialisation signals from all other quantum nodes. Since all nodes have the same information, all quantum nodes will arrive at the same value for $t_{\text{all\_known}}$.

For example, in a quantum network with two quantum nodes,

$$t_{1,\text{known}} = t_{1,\text{ready}} + t_{12,\text{max}} \qquad (20)$$

$$t_{2,\text{known}} = t_{2,\text{ready}} + t_{21,\text{max}} \qquad (21)$$

and

$$t_{\text{all\_known}} = \max(t_{1,\text{known}}, t_{2,\text{known}}) = \max(t_{1,\text{ready}} + t_{12,\text{max}}, t_{2,\text{ready}} + t_{21,\text{max}}) \qquad (22)$$

The synchronised start time $t_{\text{start}}$ may then be determined based on the time point $t_{\text{all\_known}}$. For example, the synchronised start time can be the point in time that all nodes are guaranteed to have received all initialisation signals form all other nodes: $t_{\text{start}} = t_{\text{all\_known}}$. However, to allow for the computation time, the synchronised start time $t_{\text{start}}$ is preferably a later moment in time, for example based on a fixed delay: $t_{\text{start}} = t_{\text{all\_known}} + t_{\text{margin}}$. In other embodiments, the start times may be limited to a discretised set of potential start times, similar to the discretised set of allowed transmission times. By using a set of potential start times, additional uncertainty regarding the start time may be removed.

Preferably, the potential start times are equally distributed over time, i.e., the set of potential start times forms a regular periodical (one-dimensional) grid. Typically, the start times may be based on the clock period of the synchronised clock $\Delta t_{\text{clock}}$, e.g.,

$$\{t_{\text{start}}\} = \{t = t_0 + k \, \Delta t_{\text{clock}}, \; k = 1, 2, \ldots\} \qquad (23)$$

In other embodiments, $k$ may be chosen in larger multiples, e.g., $k = 2, 4, 6, \ldots$ or $k = 8, 16, 24, \ldots$, et cetera. The set of start times may be derived from the clock signal using a frequency divider. The values for $k$ can, e.g., be based on the clock period and on the properties of the electronics used to perform the computations.

All nodes then wait until the time equals the synchronised start time $t_{\text{start}}$, at which moment they simultaneously start the operational stage. Starting the operational stage may comprise arming the signal generator previous to the synchronised start time, preferably in the interval between the start time immediately preceding the synchronised start time and the (actual) synchronised start time. The armed signal generator may then generate a start signal in response to receiving a signal from the synchronised clock. A first qubit manipulation may then be executed in response to receiving the start signal. Thus, the timing of the manipulation may be based upon reception of a high-precision start signal.

The operational stage may comprise each quantum node manipulating its local qubit in accordance with the qubit operation. The timing of the manipulation can be based on the determined synchronised start time $t_{\text{start}}$ and on a signal from the synchronised clock. The operational stage may also comprise a waiting period to allow for travel time differences between each quantum node and an intermediate location where the quantum event, e.g., entangling, may take place.

In an embodiment, the method may further comprise receiving or determining an intermediate transmission delay difference to an intermediate location between the first node and the second node. The intermediate transmission delay difference can be based on a first intermediate transmission delay between the first node and the intermediate location and on a second intermediate transmission delay between the second node and the intermediate location. In such an embodiment, the start time may be based on the determined intermediate transmission delay difference.

For example, a first intermediate transmission delay $t_{1,\text{IM}}$ may be defined as the transmission delay between the first node and the intermediate location, and a second intermediate transmission delay $t_{2,\text{IM}}$ may be defined as the transmission delay between the second node and the intermediate location. The intermediate transmission delay difference $\Delta t_{12,\text{IM}}$ to an intermediate location IM between the first node and the second node may then be based on or defined as $\Delta t_{12,\text{IM}} = t_{2,\text{IM}} - t_{1,\text{IM}}$. In such an embodiment, the timing of the manipulation may be based, additionally, on the determined intermediate transmission delay difference $\Delta t_{12,\text{IM}}$.

This way, the timing at the nodes may be adjusted to ensure a synchronised event at an intermediate location even when the transmission delays to the intermediate location are not equal for all involved nodes.

After the operational stage is concluded, the quantum nodes may begin a new preparatory stage.

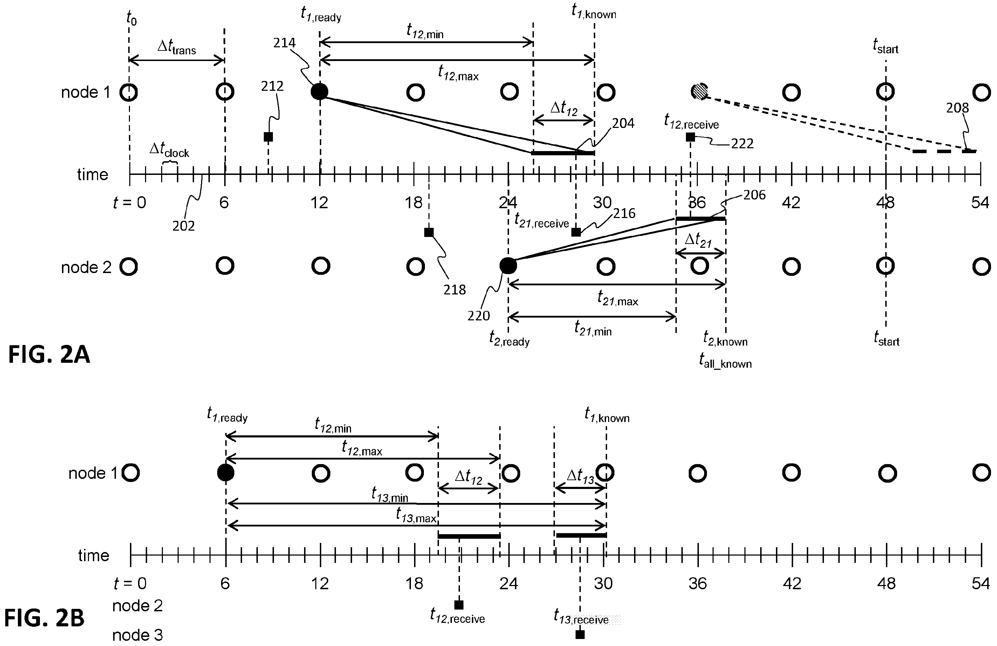

**Fig. 2A** and **2B** schematically depict methods of determining a synchronised start time according to embodiments of the invention. In particular, **Fig. 2A** depicts a plurality of time-related parameters for determining a synchronised starting time $t_{\text{start}}$ for a quantum network with two quantum nodes, node 1 and node 2. A time line **202** is subdivided based on counts of the synchronised clock. Because node 1 and node 2 base their time keeping on synchronised clocks, they have the same time base and the same time line may be used for both nodes. The time between two counts of the synchronised clock is the clock period $\Delta t_{\text{clock}}$, which is the reciprocal of the clock frequency.

During an calibration stage, transmission delay information has been determined and shared by nodes 1 and 2. In the depicted example, the transmission delay information comprises minimum transmission delays ($t_{12,\text{min}}$ and $t_{21,\text{min}}$), maximum transmission delays ($t_{12,\text{max}}$ and $t_{21,\text{max}}$), and transmission delay intervals ($\Delta t_{12}$ and $\Delta t_{21}$). Transmission delay interval $\Delta t_{12}$ is defined as the difference between the maximum and minimum transmission delays ($\Delta t_{12} = t_{12,\text{max}} - t_{12,\text{min}}$) and denotes the uncertainty in transmission delay for a signal transmitted from node 1 to node 2; similarly transmission delay interval $\Delta t_{21}$ denotes the uncertainty in transmission delay for a signal transmitted from node 2 to node 1. It is assumed that in between two calibration stages, the transmission delay information does not significantly change, so, for example, the transmission delay interval **208** of a (potential) signal sent by node 1 at $t = 36$ is the same as the transmission delay interval **204** of the signal sent by node 1 at $t = 12$.

During the calibration stage, a constant transmission interval $\Delta t_{\text{trans}}$ has been selected by nodes 1 and 2, which is larger than the transmission delay intervals in the network. In the depicted example, $\Delta t_{12} \approx 3.9$ clock periods, $\Delta t_{21} \approx 3.2$ clock periods, and $\Delta t_{\text{trans}} = 6$ clock periods. A set of allowed transmission times $\{t_{\text{trans}}\}$ is defined by integer multiples of the transmission interval, i.e., in this example, $\{t_{\text{trans}}\} = \{t = 0, 6, 12, ...\}$. Furthermore, a set of potential start times has been selected as multiples of eight times the clock period, so $\{t_{\text{start}}\} = \{t = 0, 8, 16, ...\}$. Moreover, the nodes have agreed to wait at least four clock periods after the time at which all nodes know that all nodes are aware that all nodes have prepared their qubit (i.e., after $t_{\text{all\_known}}$), to allow the nodes sufficient time to finish all computations and to prepare the operational phase.

Based on the transmission delay information, each signal received in a transmission delay interval can be associated with an allowed transmission time, and conversely, each signal sent at an allowed transmission time is (practically) guaranteed to arrive within a known transmission delay interval.

During a preparatory stage, nodes 1 and 2 may prepare their respective qubits. Node 1 may have finished preparing its qubit at a first moment in time **212** at $t \approx 8.8$. Node 1 waits until the first time point that is an allowed transmission time **214** at $t = 12$. At that moment, node 1 sends a signal to node 2 indicating that node 1 has finished preparing its qubit. This moment in time may be referred to as the first ready time $t_{1,\text{ready}}$. The signal is received by node 2 at a second moment in time **216** at $t \approx 28.3$, which may be labelled $t_{21,\text{receive}}$. As was explained above, based on the transmission delay information, node 2 may determine the corresponding allowed transmission time $t_{1,\text{ready}}$, at which node 1 sent the initialisation signal. Node 2 may do so for example by computing:

$$t_{1,\text{ready}} = \Delta t_{\text{trans}} \cdot \text{round}\left(\frac{t_{12,\text{receive}} - \frac{t_{12,\text{min}} + t_{12,\text{max}}}{2}}{\Delta t_{\text{trans}}}\right) = 6 \cdot \text{round}\left(\frac{28.3 - \frac{13.6 + 17.5}{2}}{6}\right) = 12 \quad (24)$$

Based on the first ready time and the transmission delay information, both node 1 and node 2 can compute the latest time by which node 2 could have received the initialisation signal, which may be labelled $t_{1,\text{ready}}$. They can do so by computing:

$$t_{1,known} = t_{1,ready} + t_{12,max} = 12 + 17.5 = 29.5. \qquad (25)$$

As nodes 1 and 2 use the same values for the parameters in the computation, they will arrive at the same result.

Similarly, node 2 may finish preparing its qubit at a third moment in time **218** at $t = 19.0$. Node 2 waits until the first following allowed transmission time **220,** labelled $t_{2,ready}$, at $t = 24$ and transmits a second initialisation signal to node 1, which is received by node 1 at a fourth moment in time **222** at $t \approx 35.6$. Node 1 computes $t_{2,ready}$ in an analogous fashion, and both nodes compute $t_{2,known} \approx 37.8$.

Node 1 and 2 then both compute the time $t_{all\_known}$ at which all nodes know that all nodes are aware that all nodes have prepared their qubit, e.g. by computing:

$$t_{all\_known} = \max(t_{1,known}, t_{2,known}) = \max(29.5, 37.8) = 37.8 \qquad (26)$$

As described above, in the depicted example, the potential start times are multiples of 8 with the condition that the actual start time is at least 4 after $t_{all\_known}$, which in this example may be computed by:

$$t_{start} = 8 \cdot \mathrm{ceil}\left( (t_{all\_known}+4)/8 \right) = 8 \cdot \mathrm{ceil}\left( (37.8+4)/8 \right) = 48 \qquad (27)$$

**Fig. 2B** depicts a plurality of time-related parameters for determining a time $t_{1,known}$ when all nodes are guaranteed to be aware that a first node has prepared its qubit in a quantum network with three quantum nodes, node 1, node 2, and node 3.

In a quantum network with more than 2 nodes, the transmission delay information comprises a transmission delay distribution for each pair of nodes in the network. For example, in a network with 3 nodes, there are $3 \cdot (3-1) = 6$ connections. The parameters characterising each connection are distributed to all nodes in the network, so e.g. node 2 also has access to the parameters characterising the connection between nodes 1 and 3.

When e.g. node 1 has finished preparing its local qubit, node 1 transmits, at allowed transmission time $t_{1,ready}$, a first initialisation signal to node 2 and a second initialisation signal to node 3. When node 2 receives the first initialisation signal, node 2 may compute $t_{1,ready}$ based on (in this example), $t_{12,receive}$, $t_{12,min}$, and $t_{12,max}$ in the same way as described above with reference to **Fig. 2A.** When node 3 receives the second initialisation signal, node 3 may compute $t_{1,ready}$ based on, $t_{13,receive}$, $t_{13,min}$, and $t_{13,max}$ in an analogous way. Both nodes subsequently compute $t_{1,known}$ in the same way:

$$t_{1,known} = \max\left(t_{1,ready} + t_{12,max},\ t_{1,ready} + t_{13,max}\right) = 30.2 \qquad (28)$$

Because both nodes 2 and 3 have computed the same time $t_{1,ready}$, and both nodes use the same values for $t_{12,max}$ and $t_{13,max}$, both nodes will arrive at the same value for $t_{1,known}$.

**Fig. 3A-3C** depict various topologies for a quantum network comprising a plurality of quantum nodes according to embodiments of the invention. In particular, **Fig. 3A** depicts a quantum network topology with two quantum nodes **302,304,** and two classical communication channels connecting the two quantum nodes. The nodes each determine and, where necessary, share the transmission delay information, the set of allowed transmission times, and the set of potential start times, based on predetermined criteria.

**Fig. 3B** depicts a quantum network topology with two quantum nodes **312,314,** and two classical communication channels connecting the two quantum nodes. The quantum network furthermore comprises a central controller **316** communicatively connected to the quantum nodes. In this embodiment, the quantum nodes share their information (only) with the controller, e.g. times at which test signals were sent and received. Based on this information, the controller determines the transmission delay information, the set of allowed transmission times, and the set of potential start times, and distributes these parameters to the nodes. Mixed forms are also possible, in which, e.g., the nodes determine the transmission delay information and share this with the central controller, while the central controller determines and distributes the set of allowed transmission times and the set of potential start times.

**Fig. 3C** depicts a quantum network topology with two quantum nodes **322-330,** and twenty (one-way) classical communication channels connecting each pair of quantum nodes. Such a network can be either combined with a decentralised network structure as discussed above with reference to **Fig. 3A,** or with a centralised or mixed network structure as discussed above with reference to **Fig. 3B.**

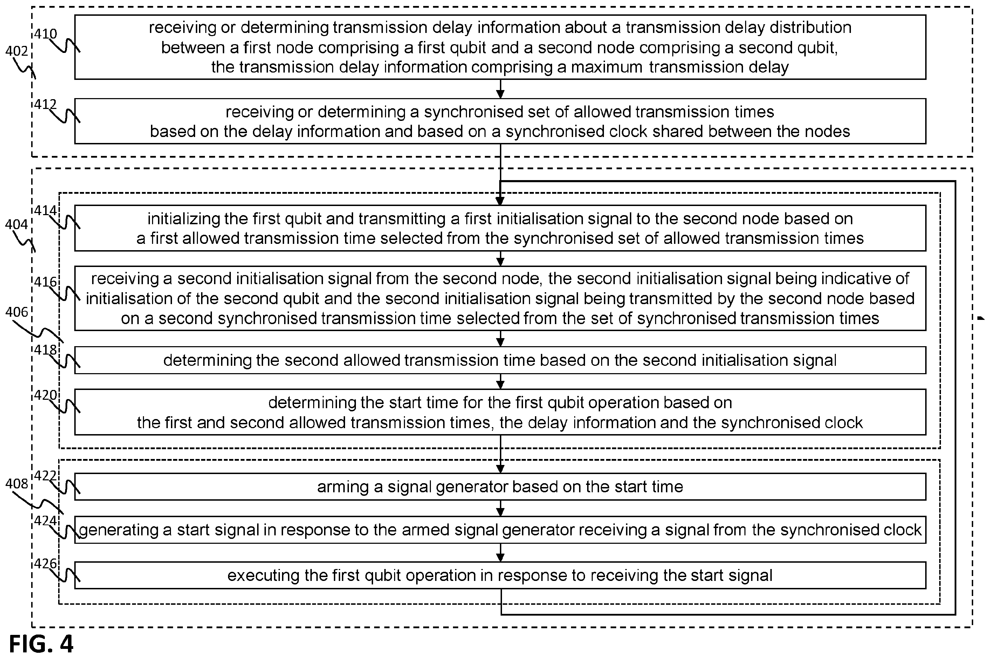

**Fig. 4** depicts a flow diagram for synchronising events at a plurality of nodes in a quantum network according to an embodiment of the invention. The method comprises an calibration stage **402,** and an execution stage **404.** The execution stage comprises a preparatory stage **406** and, optionally, an operational stage **408.** The method may be executed by one or more quantum nodes, e.g. quantum nodes as discussed above with reference to **Fig. 1.**

During the calibration stage, the quantum nodes share information allowing them to successfully set up an entanglement. During the preparatory stage, each quantum node initialises a (local) qubit. Qubit initialisation may involve a trial-and-error process which can take an *a priori* unknown number of tries, and therefore has an essentially unpredictable duration that is typically different for each of the involved quantum nodes. During the operational stage, each involved quantum node executes a sequence of manipulations to initiate the entanglement attempt. This may be followed by an application-specific sequence of qubit manipulations.

During the operational stage, timing of the sequence of manipulations is critical. This relates both to timing of steps within a single node and to timing of manipulations between nodes, i.e. synchronisation. In a typical use case, the underlying physical processes demand that the manipulations on the involved nodes are synchronised to a level of 1 ns or better during the operational stage. Exact values may depend on the parameters of the system, such as the wavelength of the photons to be entangled.

The calibration stage **402** comprises steps **410,412.** In a step **410,** the method comprises receiving or determining transmission delay information about a transmission delay distribution of signals transmitted between a first node comprising a first qubit and a second node comprising a second qubit, the transmission delay information comprising a maximum transmission delay. More in general, each node involved in the event may receive or determine transmission delay information about a transmission delay distribution for each pair of nodes involved in the event. Typically, this information is determined for and distributed to each node in the network. The transmission delay information comprises at least a maximum transmission delay for each connection between a pair of nodes.

In a step **412,** the method comprises receiving or determining a synchronised set of allowed transmission times based on the transmission delay distribution and based on a synchronised clock shared between the nodes. The set of allowed transmission times may be determined by each node individually using a deterministic algorithm, or the set of allowed transmission times may be determined by a central controller and distributed to all nodes involved in the event or, more typically, to all nodes in the network.

The preparatory stage comprises steps **414-420.** In a step **414,** the method comprises initializing the first qubit and transmitting a first initialisation signal to the second node based on a first allowed transmission time selected from the synchronised set of allowed transmission times. In a step **416,** the method comprises receiving a second initialisation signal from the second node, the second initialisation signal being indicative of initialisation of the second qubit and the second initialisation signal being transmitted by the second node based on a second allowed transmission time selected from the synchronised set of allowed transmission times. The order in which steps **414** and **416** are performed by the first node may depend on the time it takes for the first and second nodes to finish preparing their respective qubits.

In a step **418,** the method comprises determining the second allowed transmission time based on the second initialisation signal. In a step **420,** the method comprises determining the start time for the first qubit operation based on the first and second allowed transmission times, the maximum transmission delay and the synchronised clock.

In a typical embodiment, the preparatory stage is performed by each of the nodes involved in the event with respect to each pair of nodes involved in the event. For example, in a network as shown in **Fig. 3A** or **3B,** steps **414-420** are performed both by node 1 and node 2. When performed by node 1, node 1 is the first node and node 2 is the second node, and when performed by node 2, node 2 is the first node and node 1 is the second node. Similarly in a network as shown in **Fig. 3C,** steps **414-420** are performed by all nodes 1-5. When performed by node 1, node 1 is the first node and each of nodes 2-5 takes the role of the second node, et cetera.

In some embodiments, the method further comprises operational stage **408** comprising one or more of steps **422-426.** In these embodiments, the method may comprise a step **422** comprising arming a signal generator based on the start time. In general, the signal generator can control events in the quantum node with a higher precision than the controller doing the computations and the classical communication with the other nodes involved in the event. Thus, the controller may arm the signal generator with a relatively low temporal accuracy, and the signal generator will start the qubit manipulations with the desired temporal accuracy. To that end, the method may further comprise a step **424** comprising generating a start signal in response to the armed signal generator receiving a signal from the synchronised clock. The method may further comprise a step **426** comprising executing the first qubit operation in response to receiving the start signal. The first qubit operation may comprise manipulating the first qubit in accordance with the qubit operation. Steps **422-426** are generally performed by each of the nodes involved in the event.

After the operational stage is concluded, the quantum nodes may begin a new preparatory stage. In a network with more than two nodes, different selections of nodes can perform different iterations of the operational stage. Depending on the network topology, groups of nodes can even perform the operational stage partially or completely in parallel, possibly after a shared initialisation phase.

By employing this method, events at different nodes in a quantum network may be synchronised with high precision and efficiency. Analysis of such an approach has shown that for a realistic two-node system, the method described in **Fig. 4** leads to an entanglement attempt rate that is roughly 40% higher than an approach without communication, i.e., an approach where the operational stage is started at a fixed time, regardless of whether the nodes have finished preparing their respective qubits. Hence, this method may lead to a roughly 40% higher throughput.

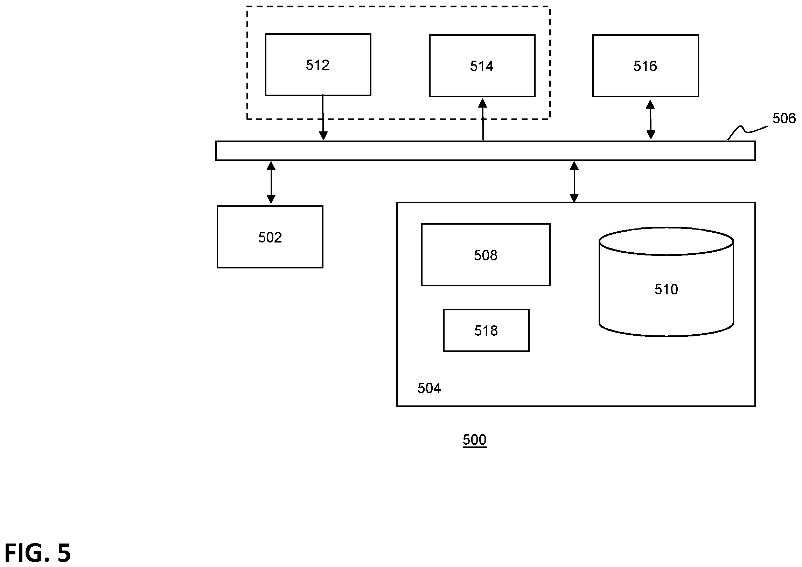

**Fig. 5** is a block diagram illustrating exemplary data processing systems described in this disclosure. Data processing system **500** includes at least one processor **502** coupled to memory elements **504** through a system bus **506.** As such, the data processing system stores program code within memory elements **504.** Further, processor **502** executes the program code accessed from memory elements **504** via system bus **506.** In one aspect, data processing system is implemented as a computer that is suitable for storing and/or executing program code. It should be appreciated, however, that data processing system **500** may be implemented in the form of any system including a processor and memory that is capable of performing the functions described within this specification.

Memory elements **504** may include one or more physical memory devices such as, for example, local memory **508** and one or more bulk storage devices **510.** Local memory may refer to random access memory or other non-persistent memory device(s) generally used during actual execution of the program code. A bulk storage device may be implemented as a hard drive or other persistent data storage device. The processing system **500** may also include one or more cache memories (not shown) that provide temporary storage of at least some program code in order to reduce the number of times program code must be retrieved from bulk storage device **510** during execution.

Input/output (I/O) devices depicted as key device **512** and output device **514** optionally can be coupled to the data processing system. Examples of key device may include, but are not limited to, for example, a keyboard, a pointing device such as a mouse, or the like. Examples of output device may include, but are not limited to, for example, a monitor or display, speakers, or the like. Key device and/or output device may be coupled to data processing system either directly or through intervening I/O controllers. A network adapter **516** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Operation modems, cable operation modems, and Ethernet cards are examples of different types of network adapter that may be used with data processing system **500.**

As pictured in **FIG. 5,** memory elements **504** may store an application **518.** It should be appreciated that data processing system **500** may further execute an operating system (not shown) that can facilitate execution of the application. Application, being implemented in the form of executable program code, can be executed by data processing system **500,** e.g., by processor **502.** Responsive to executing application, data processing system may be configured to perform one or more operations to be described herein in further detail.

In one aspect, for example, data processing system **500** may represent a client data processing system. In that case, application **518** may represent a client application that, when executed, configures data processing system **500** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **518,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention, as defined by the appended claims. The embodiment was chosen and described in order to best explain the principles of the invention and the practical application, and to enable others of ordinary skill in the art to understand the invention for various embodiments with various modifications as are suited to the particular use contemplated.

**Claims**

1. A method for synchronising events at a plurality of nodes in a quantum network comprising:

receiving or determining (410) transmission delay information about a transmission delay distribution of signals transmitted between a first node comprising a first qubit and a second node comprising a second qubit, the transmission delay information comprising a maximum transmission delay;

receiving or determining (412) a synchronised set of allowed transmission times based on the transmission delay distribution and based on a synchronised clock shared between the nodes; and,

executing, by the first node, a first qubit operation based on a start time, wherein the execution by the first node includes:

- initializing (414) the first qubit and transmitting a first initialisation signal to the second node based on a first allowed transmission time selected from the synchronised set of allowed transmission times;
- receiving (416) a second initialisation signal from the second node, the second initialisation signal being indicative of initialisation of the second qubit, and the second initialisation signal being transmitted by the second node based on a second allowed transmission time selected from the synchronised set of allowed transmission times;
- determining (418) the second allowed transmission time based on the second initialisation signal;
- determining (420) the start time for the first qubit operation based on the first and second allowed transmission times, the maximum transmission delay and the synchronised clock.

2. The method as claimed in claim 1, wherein determining the transmission delay information further comprises determining a minimum transmission delay between the first and second nodes, and wherein the synchronised set of allowed transmission times is based on a transmission delay interval, the transmission delay interval being based on an interval between the minimum transmission delay and the maximum transmission delay.

3. The method as claimed in claim 2, wherein the time interval between two subsequent allowed transmission times in the synchronised set of allowed transmission times is larger than the transmission delay interval, preferably the time interval between subsequent transmission times being a constant.

4. The method as claimed in claim 2 or 3, wherein the transmission delay information comprises a first transmission delay interval and a first maximum transmission delay indicative of a transmission delay distribution from the first node to the second node, and a second transmission delay interval and a second maximum transmission delay indicative of a transmission delay distribution from the second node to the first node.

5. The method as claimed in any one of the preceding claims, wherein determining the second allowed transmission time is based on a reception time when the second initialisation was received and on the transmission delay distribution.

6. The method as claimed in any one claims 1-4, wherein the second signal comprises a payload and wherein determining the second allowed transmission time is based on the payload of the second signal.

7. The method as claimed in any one of the preceding claims, wherein the start time is selected from a predetermined set of start times, the predetermined set of start times preferably being equally distributed over time.

8. The method as claimed in any one of the preceding claims, wherein execution of the first qubit operation comprises:

- arming a signal generator based on the start time;
- generating a start signal in response to the armed signal generator receiving a signal from the synchronised clock; and
- executing the first qubit operation in response to receiving the start signal.

9. The method as claimed in any one of the preceding claims, further comprising:

receiving or determining an intermediate transmission delay difference to an intermediate location between the first node and the second node, the intermediate transmission delay difference being based on a first intermediate transmission delay between the first node and the intermediate location and on a second intermediate transmission delay between the second node and the intermediate location; and

wherein the start time is determined based on the intermediate transmission delay difference.

10. The method as claimed in any one of the preceding claims, wherein the plurality of nodes comprises exactly two nodes.

11. The method as claimed in any one of claims 1-9, wherein the event is synchronised between more than two nodes and wherein the method steps are performed for each pair of nodes involved in the synchronised event.

12. A node (102, 122) comprising a qubit (110, 130) and a processor (502), the node being communicatively coupled to one or more other nodes in a quantum network, the node having access to a synchronised clock (106, 126) shared with the one or more other nodes, the processor (502) being configured to perform method steps comprising:

receiving or determining (410) transmission delay information about a transmission delay interval between a first node comprising a first qubit and a second node comprising a second qubit, the transmission delay information comprising a maximum transmission delay;

receiving or determining (412) a set of allowed transmission times based on the transmission delay information and based on a synchronised clock shared between the nodes; and,

executing, by the first node, a first qubit operation based on a start time, wherein the execution by the first node includes:

- initializing (414) the first qubit and transmitting a first initialisation signal to the second node based on a first allowed transmission time selected from the set of allowed transmission times;
- receiving (416) a second initialisation signal from the second node, the second initialisation signal being indicative of initialisation of the second qubit and the second initialisation signal being transmitted by the second node based on a second allowed transmission time selected from the set of allowed transmission times;
- determining (418) the second allowed transmission time based on the second initialisation signal;

determining (420) the start time for the first qubit operation based on the first and second allowed transmission times, the transmission delay information and the synchronised clock.

13. A quantum network of nodes (302, 304, 312, 314, 322, 324, 326, 328, 330) comprising a plurality of nodes as claimed in claim 12.

14. A computer program or suite of computer programs comprising at least one software code portion or a computer program product storing at least one software code portion, the software code portion, when run on a computer system of the node of claim 12, being configured for executing the method as claimed in any one of claims 1-11.

15. A non-transitory computer-readable storage medium storing at least one software code portion, the software code portion, when executed or processed by a computer of the node of claim 12, is configured to perform the method as claimed in any one of claims 1-11.

**Patentansprüche**

1. Verfahren zum Synchronisieren von Ereignissen an einer Vielzahl von Knoten in einem Quantennetzwerk, umfassend:

Empfangen oder Bestimmen (410) von Übertragungsverzögerungsinformationen über eine Übertragungsverzögerungsverteilung von Signalen, die zwischen einem ersten Knoten, der ein erstes Qubit umfasst, und einem zweiten Knoten, der ein zweites Qubit umfasst, übertragen werden, wobei die Übertragungsverzögerungsinformationen eine maximale Übertragungsverzögerung umfassen;

Empfangen oder Bestimmen (412) einer synchronisierten Menge erlaubter Übertragungszeiten basierend auf der Übertragungsverzögerungsverteilung und basierend auf einer zwischen den Knoten geteilten synchronisierten Uhr; und

Ausführen, durch den ersten Knoten, einer ersten Qubit-Operation basierend auf einer Startzeit, wobei die Ausführung durch den ersten Knoten Folgendes umfasst:

- Initialisieren (414) des ersten Qubits und Übertragen eines ersten Initialisierungssignals an den zweiten Knoten basierend auf einer ersten erlaubten Übertragungszeit, die aus der synchronisierten Menge erlaubter Übertragungszeiten ausgewählt ist;
- Empfangen (416) eines zweiten Initialisierungssignals vom zweiten Knoten, wobei das zweite Initialisierungssignal eine Initialisierung des zweiten Qubits anzeigt und wobei das zweite Initialisierungssignal durch den zweiten Knoten basierend auf einer zweiten erlaubten Übertragungszeit, die aus der synchronisierten Menge erlaubter Übertragungszeiten ausgewählt ist, übertragen wird;
- Bestimmen (418) der zweiten erlaubten Übertragungszeit basierend auf dem zweiten Initialisierungssignal;

- Bestimmen (420) der Startzeit für die erste Qubit-Operation basierend auf der ersten und der zweiten erlaubten Übertragungszeit, der maximalen Übertragungsverzögerung und der synchronisierten Uhr.

2. Verfahren nach Anspruch 1, wobei das Bestimmen der Übertragungsverzögerungsinformationen ferner das Bestimmen einer minimalen Übertragungsverzögerung zwischen dem ersten und dem zweiten Knoten umfasst, und wobei die synchronisierte Menge erlaubter Übertragungszeiten auf einem Übertragungsverzögerungsintervall basiert, wobei das Übertragungsverzögerungsintervall auf einem Intervall zwischen der minimalen Übertragungsverzögerung und der maximalen Übertragungsverzögerung basiert.

3. Verfahren nach Anspruch 2, wobei das Zeitintervall zwischen zwei aufeinanderfolgenden erlaubten Übertragungszeiten in der synchronisierten Menge erlaubter Übertragungszeiten größer ist als das Übertragungsverzögerungsintervall, wobei vorzugsweise das Zeitintervall zwischen aufeinanderfolgenden Übertragungszeiten konstant ist.

4. Verfahren nach einem der Ansprüche 2 oder 3, wobei die Übertragungsverzögerungsinformationen ein erstes Übertragungsverzögerungsintervall und eine erste maximale Übertragungsverzögerung umfassen, die auf eine Übertragungsverzögerungsverteilung vom ersten Knoten zum zweiten Knoten hinweisen, sowie ein zweites Übertragungsverzögerungsintervall und eine zweite maximale Übertragungsverzögerung, die auf eine Übertragungsverzögerungsverteilung vom zweiten Knoten zum ersten Knoten hinweisen.

5. Verfahren nach einem der vorhergehenden Ansprüche, wobei das Bestimmen der zweiten erlaubten Übertragungszeit auf einer Empfangszeit basiert, zu der die zweite Initialisierung empfangen wurde, und auf der Übertragungsverzögerungsverteilung.

6. Verfahren nach einem der Ansprüche 1-4, wobei das zweite Signal eine Nutzlast umfasst und wobei das Bestimmen der zweiten erlaubten Übertragungszeit auf der Nutzlast des zweiten Signals basiert.

7. Verfahren nach einem der vorhergehenden Ansprüche, wobei die Startzeit aus einer vorbestimmten Menge von Startzeiten ausgewählt wird, wobei die vorbestimmte Menge von Startzeiten vorzugsweise gleichmäßig über die Zeit verteilt ist.

8. Verfahren nach einem der vorhergehenden Ansprüche, wobei die Ausführung der ersten Qubit-Operation Folgendes umfasst:

   - Scharfschalten eines Signalgenerators basierend auf der Startzeit;
   - Erzeugen eines Startsignals als Reaktion auf den Empfang eines Signals von der synchronisierten Uhr durch den scharfgeschalteten Signalgenerator; und
   - Ausführen der ersten Qubit-Operation als Reaktion auf den Empfang des Startsignals.

9. Verfahren nach einem der vorhergehenden Ansprüche, ferner umfassend:

   Empfangen oder Bestimmen einer Zwischenübertragungsverzögerungsdifferenz zu einem Zwischenort zwischen dem ersten Knoten und dem zweiten Knoten, wobei die Zwischenübertragungsverzögerungsdifferenz auf einer ersten Zwischenübertragungsverzögerung zwischen dem ersten Knoten und dem Zwischenort und auf einer zweiten Zwischenübertragungsverzögerung zwischen dem zweiten Knoten und dem Zwischenort basiert; und
   wobei die Startzeit basierend auf der Zwischenübertragungsverzögerungsdifferenz bestimmt wird.

10. Verfahren nach einem der vorhergehenden Ansprüche, wobei die Vielzahl von Knoten genau zwei Knoten umfasst.

11. Verfahren nach einem der Ansprüche 1-9, wobei das Ereignis zwischen mehr als zwei Knoten synchronisiert wird und wobei die Verfahrensschritte für jedes Paar von Knoten, die an dem synchronisierten Ereignis beteiligt sind, ausgeführt werden.

12. Knoten (102, 122), umfassend ein Qubit (110, 130) und einen Prozessor (502), wobei der Knoten mit einem oder mehreren anderen Knoten in einem Quantennetzwerk kommunikativ gekoppelt ist, der Knoten Zugriff auf eine zwischen dem oder den anderen Knoten geteilte synchronisierte Uhr (106, 126) hat, wobei der Prozessor (502) dazu konfiguriert ist, Verfahrensschritte auszuführen, umfassend:

Empfangen oder Bestimmen (410) von Übertragungsverzögerungsinformationen über ein Übertragungsverzögerungsintervall zwischen einem ersten Knoten, der ein erstes Qubit umfasst, und einem zweiten Knoten, der ein zweites Qubit umfasst, wobei die Übertragungsverzögerungsinformationen eine maximale Übertragungsverzögerung umfassen;

Empfangen oder Bestimmen (412) einer Menge erlaubter Übertragungszeiten basierend auf den Übertragungsverzögerungsinformationen und basierend auf einer zwischen den Knoten geteilten synchronisierten Uhr; und Ausführen, durch den ersten Knoten, einer ersten Qubit-Operation basierend auf einer Startzeit, wobei die Ausführung durch den ersten Knoten Folgendes umfasst:

- Initialisieren (414) des ersten Qubits und Übertragen eines ersten Initialisierungssignals an den zweiten Knoten basierend auf einer ersten erlaubten Übertragungszeit, die aus der Menge erlaubter Übertragungszeiten ausgewählt ist;
- Empfangen (416) eines zweiten Initialisierungssignals vom zweiten Knoten, wobei das zweite Initialisierungssignal eine Initialisierung des zweiten Qubits anzeigt und wobei das zweite Initialisierungssignal durch den zweiten Knoten basierend auf einer zweiten erlaubten Übertragungszeit, die aus der Menge erlaubter Übertragungszeiten ausgewählt ist, übertragen wird;
- Bestimmen (418) der zweiten erlaubten Übertragungszeit basierend auf dem zweiten Initialisierungssignal;
- Bestimmen (420) der Startzeit für die erste Qubit-Operation basierend auf der ersten und der zweiten erlaubten Übertragungszeit, den Übertragungsverzögerungsinformationen und der synchronisierten Uhr.

13. Quantennetzwerk von Knoten (302, 304, 312, 314, 322, 324, 326, 328, 330), umfassend eine Vielzahl von Knoten nach Anspruch 12.

14. Computerprogramm oder Suite von Computerprogrammen, umfassend mindestens einen Softwarecodeabschnitt oder ein Computerprogrammprodukt, das mindestens einen Softwarecodeabschnitt speichert, wobei der Softwarecodeabschnitt, wenn er auf einem Computersystem des Knotens nach Anspruch 12 ausgeführt wird, dazu konfiguriert ist, das Verfahren nach einem der Ansprüche 1-11 auszuführen.

15. Nicht-flüchtiges, computerlesbares Speichermedium, das mindestens einen Softwarecodeabschnitt speichert, wobei der Softwarecodeabschnitt, wenn er durch einen Computer des Knotens nach Anspruch 12 ausgeführt oder verarbeitet wird, dazu konfiguriert ist, das Verfahren nach einem der Ansprüche 1-11 auszuführen.

**Revendications**

1. Procédé de synchronisation d'événements au niveau d'une pluralité de nœuds dans un réseau quantique, comprenant :

la réception ou la détermination (410) d'informations de retard de transmission concernant une distribution de retards de transmission de signaux transmis entre un premier nœud comprenant un premier qubit et un second nœud comprenant un second qubit, les informations de retard de transmission comprenant un retard de transmission maximal ;
la réception ou la détermination (412) d'un ensemble synchronisé de temps de transmission autorisés, sur la base de la distribution de retards de transmission et sur la base d'une horloge synchronisée partagée entre les nœuds ; et
l'exécution, par le premier nœud, d'une première opération de qubit sur la base d'un temps de démarrage, dans lequel l'exécution par le premier nœud inclut :

- l'initialisation (414) du premier qubit et la transmission d'un premier signal d'initialisation au second nœud sur la base d'un premier temps de transmission autorisé sélectionné parmi l'ensemble synchronisé de temps de transmission autorisés ;
- la réception (416) d'un second signal d'initialisation depuis le second nœud, le second signal d'initialisation indiquant une initialisation du second qubit, et le second signal d'initialisation étant transmis par le second nœud sur la base d'un second temps de transmission autorisé sélectionné parmi l'ensemble synchronisé de temps de transmission autorisés ;
- la détermination (418) du second temps de transmission autorisé, sur la base du second signal d'initialisation ;
- la détermination (420) du temps de démarrage de la première opération de qubit sur la base des premier et second temps de transmission autorisés, du retard de transmission maximal et de l'horloge synchronisée.

2. Procédé selon la revendication 1, dans lequel la détermination des informations de retard de transmission comprend en outre la détermination d'un retard de transmission minimal entre les premier et second nœuds, et dans lequel l'ensemble synchronisé de temps de transmission autorisés est basé sur un intervalle de retard de transmission, l'intervalle de retard de transmission étant basé sur un intervalle entre le retard de transmission minimal et le retard de transmission maximal.

3. Procédé selon la revendication 2, dans lequel l'intervalle de temps entre deux temps de transmission autorisés successifs dans l'ensemble synchronisé de temps de transmission autorisés est supérieur à l'intervalle de retard de transmission, de préférence l'intervalle de temps entre des temps de transmission successifs étant constant.

4. Procédé selon la revendication 2 ou 3, dans lequel les informations de retard de transmission comprennent un premier intervalle de retard de transmission et un premier retard de transmission maximal indiquant une distribution de retards de transmission du premier nœud au second nœud, et un second intervalle de retard de transmission et un second retard de transmission maximal indiquant une distribution de retards de transmission du second nœud au premier nœud.

5. Procédé selon quelconque des revendications précédentes, dans lequel la détermination du second temps de transmission autorisé est basée sur un temps de réception auquel la seconde initialisation a été reçue et sur la distribution de retards de transmission.

6. Procédé selon quelconque des revendications 1 à 4, dans lequel le second signal comprend une charge utile et dans lequel la détermination du second temps de transmission autorisé est basée sur la charge utile du second signal.

7. Procédé selon quelconque des revendications précédentes, dans lequel le temps de démarrage est choisi parmi un ensemble prédéterminé de temps de démarrage, l'ensemble prédéterminé de temps de démarrage étant de préférence distribué de manière uniforme dans le temps.

8. Procédé selon quelconque des revendications précédentes, dans lequel l'exécution de la première opération de qubit comprend :

- l'armement d'un générateur de signal sur la base du temps de démarrage ;
- la génération d'un signal de démarrage lorsque le générateur de signal armé reçoit un signal de l'horloge synchronisée ; et
- l'exécution de la première opération de qubit en réponse à la réception du signal de démarrage.

9. Procédé selon quelconque des revendications précédentes, comprenant en outre :

la réception ou la détermination d'une différence de retards de transmission intermédiaires à un emplacement intermédiaire entre le premier nœud et le second nœud, la différence de retards de transmission intermédiaires étant basée sur un premier retard de transmission intermédiaire entre le premier nœud et l'emplacement intermédiaire et sur un second retard de transmission intermédiaire entre le second nœud et l'emplacement intermédiaire ; et
dans lequel le temps de démarrage est déterminé sur la base de la différence de retards de transmission intermédiaires.

10. Procédé selon quelconque des revendications précédentes, dans lequel la pluralité de nœuds comprend exactement deux nœuds.

11. Procédé selon quelconque des revendications 1 à 9, dans lequel l'événement est synchronisé entre plus de deux nœuds et dans lequel les étapes du procédé sont réalisées pour chaque paire de nœuds impliqués dans l'événement synchronisé.

12. Nœud (102, 122) comprenant un qubit (110, 130) et un processeur (502), le nœud étant couplé de manière communicative
à un ou plusieurs autres nœuds dans un réseau quantique, le nœud ayant accès à une horloge synchronisée (106, 126) partagée avec les un ou plusieurs autres nœuds, le processeur (502) étant configuré pour réaliser des étapes de procédé comprenant :

la réception ou la détermination (410) d'informations de retard de transmission concernant un intervalle de retard de transmission entre un premier nœud comprenant un premier qubit et un second nœud comprenant un second qubit, les informations de retard de transmission comprenant un retard de transmission maximal ;

la réception ou la détermination (412) d'un ensemble de temps de transmission autorisés, sur la base des informations de retard de transmission et sur la base d'une horloge synchronisée partagée entre les nœuds ; et, l'exécution, par le premier nœud, d'une première opération de qubit sur la base d'un temps de démarrage, dans lequel l'exécution par le premier nœud inclut :

- l'initialisation (414) du premier qubit et la transmission d'un premier signal d'initialisation au second nœud sur la base d'un premier temps de transmission autorisé choisi parmi l'ensemble de temps de transmission autorisés ;
- la réception (416) d'un second signal d'initialisation depuis le second nœud, le second signal d'initialisation étant indicatif d'une initialisation du second qubit et le second signal d'initialisation étant transmis par le second nœud sur la base d'un second temps de transmission autorisé choisi parmi l'ensemble de temps de transmission autorisés ;
- la détermination (418) du second temps de transmission autorisé, sur la base du second signal d'initialisation ;

la détermination (420) du temps de démarrage pour la première opération de qubit sur la base des premier et second temps de transmission autorisés, des informations de retard de transmission et de l'horloge synchronisée.

13. Réseau quantique de nœuds (302, 304, 312, 314, 322, 324, 326, 328, 330) comprenant une pluralité de nœuds selon la revendication 12.

14. Programme informatique ou suite de programmes informatiques comprenant au moins une partie de code logiciel ou produit de programme informatique stockant au moins une partie de code logiciel, la partie de code logiciel, lorsqu'elle est exécutée sur un système informatique du nœud selon la revendication 12, étant configurée pour exécuter le procédé selon quelconque des revendications 1 à 11.

15. Support de stockage non transitoire lisible par ordinateur stockant au moins une partie de code logiciel, la partie de code logiciel, lorsqu'elle est exécutée ou traitée par un ordinateur du nœud selon la revendication 12, est configurée pour réaliser le procédé selon quelconque des revendications 1 à 11.

**FIG. 1**

FIG. 2A

FIG. 2B

EP 4 430 770 B1

FIG. 3C

node 2 324
node 1 322
node 3 326
node 4 328
node 5 330

FIG. 3A

node 1 302
node 2 304

FIG. 3B

node 1 312
node 2 314
controller 316

**402** **410** receiving or determining transmission delay information about a transmission delay distribution between a first node comprising a first qubit and a second node comprising a second qubit, the transmission delay information comprising a maximum transmission delay

**412** receiving or determining a synchronised set of allowed transmission times based on the delay information and based on a synchronised clock shared between the nodes

**404** **414** initializing the first qubit and transmitting a first initialisation signal to the second node based on a first allowed transmission time selected from the synchronised set of allowed transmission times

**406** **416** receiving a second initialisation signal from the second node, the second initialisation signal being indicative of initialisation of the second qubit and the second initialisation signal being transmitted by the second node based on a second synchronised transmission time selected from the set of synchronised transmission times

**418** determining the second allowed transmission time based on the second initialisation signal

**420** determining the start time for the first qubit operation based on the first and second allowed transmission times, the delay information and the synchronised clock

**408** **422** arming a signal generator based on the start time

**424** generating a start signal in response to the armed signal generator receiving a signal from the synchronised clock

**426** executing the first qubit operation in response to receiving the start signal

# FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LAGO-RIVERA et al.** Telecom-heralded entanglement between multimode solid-state quantum memories. *Nature*, 2021, vol. 594, 37-40

- **HENSEN et al.** Loophole-free Bell inequality violation using electron spins separated by 1.3 kilometres. *Nature*, 2015, vol. 526, 682-686